# EUROPEAN PATENT APPLICATION

(11) **EP 2 740 986 A1**
(43) Date of publication of application: **11.06.2014**
(21) Application number: 12822653.7
(22) Date of filing: 23.07.2012
(51) Int. Cl.: F16L 58/06, F16L 58/04

(54) **A COMPOSITE ANTI-CORROSION LINING COMPRISING WATERBORNE EPOXY COVER LAYER AND USE THEREOF**

(30) Priority: 05.08.2011 CN 201110224526
(71) Applicant: Xinxing Ductile Iron Pipes Co., Ltd, Wuan, Hebei 056300 (CN)
(72) Inventor: ZHANG, Tongbo, Wuan Hebei 056300 (CN); LI, Jun, Wuan Hebei 056300 (CN); LI, Ning, Wuan Hebei 056300 (CN); LIU, Yanxue, Wuan Hebei 056300 (CN); ZHU, Wei, Wuan Hebei 056300 (CN); SHEN, Yong, Wuan Hebei 056300 (CN); ZHAO, Fuen, Wuan Hebei 056300 (CN); GE, Huaguang, Wuan Hebei 056300 (CN); YE, Weihe, Wuan Hebei 056300 (CN); ZHANG, Yongjie, Wuan Hebei 056300 (CN); SHANG, Bo, Wuan Hebei 056300 (CN)
(74) Representative: Gulde & Partner
(86) International application number: PCT/CN2012/079032
(87) International publication number: WO 2013/020449

(57) **Abstract**

The present invention relates to a composite anti-corrosion inner lining containing a water-borne epoxy coating sealing coat and an application thereof. The composite anti-corrosion inner lining comprises a cement mortar inner lining layer and the water-borne epoxy coating sealing coat coated on the cement mortar inner lining layer. The composite anti-corrosion inner lining has the advantages of preventing the precipitation of alkaline substances and harmful components from the cement mortar; the water in the cement mortar can be sealed by the water-borne epoxy coating sealing coat so as to prevent the generation of cracks; the composite anti-corrosion inner lining simultaneously poses the active anti-corrosion function of a cement mortar inner lining and passive anti-corrosion function of an organic coating; the roughness coefficient of the cement mortar inner lining can be reduced; and the composite anti-corrosion inner lining can withstand the water pressure changes in the water conveying process without being damaged.

## Description

### Field of the Invention

The present invention relates to an application of epoxy coating.

### Background of the Invention

At present, there are two types of anti-corrosion inner linings for cast iron pipes generally, one type is common cement mortar inner linings, and the other type is anti-corrosion inner linings of organic coatings.

The cement mortar inner linings have been a good anti-corrosion coatings for nodular iron pipes and it works in an active way, but due to it's inherent alkaline characteristics, the cement mortar inner linings will result in the increase of the pH value of water, the increase of the content of aluminum ions and affect the sanitation performances of the water during the water conveying initial stage of pipelines, especially small-caliber pipelines. Although the organic coating anti-corrosion inner linings (such as epoxy and polyurethane inner linings) can solve the problem, the inner linings need to be sprayed on the inner wall of the cast iron pipes, and a certain anti-corrosion effect can be achieved only when the thickness of it is not less than 500µm, so that the cost is huge, and it works in a passive way. For example, Chinese patent CN1250856A discloses an unburned ceramic-lined nodular cast iron pipe and a manufacturing method thereof, the coating of the nodular cast iron pipe comprises epoxy resin and the like and the epoxy resin is sprayed directly on the inner wall of the nodular cast iron pipe, and the thickness of the coating is 1-2mm. Obviously, the thickness like this must results in the increase of the production cost; and simultaneously, once the coating is damaged a little or has a holiday on it, which can bring fetal harm to the pipeline, the corrosion at the weak link will be exacerbated and corrosion perforation is further caused.

Japanese patent JP H03-14988 discloses an anti-corrosion inner lining for a cast iron pipe, a layer of cement mortar inner lining 2 is lined and coated on the inner wall cf the cast iron pipe 1 by the centrifugal effect, and then a layer of circular inner lining film formed by polyvinyl chloride, polyethylene and polystyrene is inserted on the cement mortar layer 2 to form an inner lining pipe with an anti-fluid corrosion effect. According to the patent technology, the circular resin film is directly inserted into the surface layer of the cement mortar of the cast iron pipe, and matching in the shape is further utilized for preventing peeling. Although a multi-layer coating way is utilized, the substances like polyethylene used in this patent have poor erosion resistance and are difficult to be attached onto the pure cement mortar; and generally, in order to enhance the adhesion, organic substances need to be added in the cement mortar inner lining, so that the whole production process becomes more complex and the cost is also higher.

It is thus evident that the selection of a novel inner lining with excellent anti-corrosion performances and relatively high cost performance by combination of active anti-corrosion and passive anti-corrosion is very important in research of the cast iron pipes; further, the pressure variation and shutdown overhaul and re-boosting will inevitably occur during the water conveying process, thus the pressure circulating performance is an important index for characterizing whether the cast iron pipes and pipe fittings are qualified or not. Whether the index is qualified or not has a direct relationship with the thickness of the coating, but the increase in the thickness must leads to the increase of the production cost. Therefore, the limitation of the thickness further becomes a difficult point in the research of such pipes and pipe fittings.

### Summary of the Invention

The present invention aims at providing a composite anti-corrosion inner lining containing a water-borne epoxy coating sealing coat, and a cast iron pipe and a pipe fitting with the composite anti-corrosion inner lining. The composite anti-corrosion inner lining has the following advantages: the water-borne epoxy coating sealing coat can inhibit the precipitation of alkaline substances and harmful components from the cement mortar and ensure the sanitation performances of water; the water in the cement mortar can be sealed by the water-borne epoxy coating sealing coat so as to promote the hydration reaction of the cement mortar, be conducive to curing and prevent the generation of cracks; simultaneously, the water-borne epoxy coating sealing coat is combined with a cement mortar inner lining to integrate active anti-corrosion performance of the cement mortar inner lining and passive anti-corrosion performance of an organic coating, and even if the epoxy sealing coat is damaged and has a holiday on it, the cement mortar inner lining can provide active anti-corrosion to ensure the long-term corrosion resistance of a pipeline; the inner wall of the cast iron pipe containing the composite anti-corrosion inner lining is smooth, so that the roughness coefficient of the cement mortar inner lining can be reduced, and the effect of improving hydraulic performance can be realized in comparison with a cement inner lining; the composite anti-corrosion inner lining can withstand the variation of water pressure in the water conveying process without being damaged; and in addition, the comprehensive cost of the composite anti-corrosion inner lining is much lower than that of an organic coating anti-corrosion inner lining, and the comprehensive cost of the pipeline can be effectively reduced.

The present invention discloses a composite anti-corrosion inner lining containing a water-borne epoxy coating sealing coat, comprising a cement mortar inner lining layer and the water-borne epoxy coating sealing coat coated on the cement mortar inner lining layer.

The present invention discloses a composite anti-corrosion inner lining containing a water-borne epoxy coating sealing coat, wherein the water-borne epoxy coating of the water-borne epoxy coating sealing coat comprises a component A and a component B, wherein:
the component A comprises the following components in percentage by mass:
   epoxy resin E-51: 10.0-50.0%
   allyl glycidyl ether and/or butyl glycidyl ether: 0-5.0%; and
   the component B comprises the following components in percentage by mass:
   water-borne epoxy resin curing agent: 20.0-60.0%
   deionized water: 20.0-55.0%
   pigment and filler: 0-50.0%
   wetting and dispersing agent: 0-4.0%
   defoaming agent: 0-1.0%
   thixotropic agent: 0-2.0%.

The water-borne epoxy resin curing agent refers to modified polyamide with a self-emulsifying function or modified fatty amine with a self-emulsifying function or an epoxy-polyamine adduct with a self-emulsifying function, and the thickness of the water-borne epoxy coating sealing coat is 20-250µm. The percentage by mass refers to the mass percent parts of the corresponding component in the water-borne epoxy coating. Allyl glycidyl ether is referred to as AGE, and butyl glycidyl ether is referred to as BGE.

The present invention discloses a composite anti-corrosion inner lining containing a water-borne epoxy coating sealing coat, wherein the water-borne epoxy coating of the water-borne epoxy coating sealing coat comprises a component A and a component B, wherein:
the component A comprises the following components in percentage by mass:
   epoxy resin E-51: 15.0-30.0%
   allyl glycidyl ether and/or butyl glycidyl ether: 0-4.0%; and
   the component B comprises the following components in percentage by mass:
   water-borne epoxy resin curing agent: 27-45.0%
   deionized water: 24.0-50.0%
   pigment and filler: 0-30.0%
   wetting and dispersing agent: 0-1.0%
   defoaming agent: 0-0.5%
   thixotropic agent: 0-0.9%.

The present invention discloses a composite anti-corrosion inner lining containing a water-borne epoxy coating sealing coat, wherein the self-emulsifying modified polyamide is preferably ANQUAMINE360 or ANQUAMINE287 produced by American Air Products and Chemicals, Inc.; the self-emulsifying modified fatty amine is preferably 8573-wy-60 produced by Shell Company, ANQUAMINE 701, ANQUAMINE721 or ANQUAMINE777 produced by American Air Products, Inc., HTW-208 produced by Jiangsu Sirgel Specialty Resins Co., Ltd. or WATERPOXY 751 produced by COGNIS Company; and the self-emulsifying epoxy-polyamine adduct is preferably WEC-402 produced by Qingdao Marine Chemical Research Institute.

The present invention discloses a composite anti-corrosion inner lining containing a water-borne epoxy coating sealing coat, wherein the pigment and filler is preferably titanium white and/or talcum powder and/or quartz powder and/or carbon black and/or precipitated barium sulfate. The present invention discloses a composite anti-corrosion inner lining containing a water-borne epoxy coating sealing coat, wherein the thixotropic agent is organic bentonite or silicon dioxide or hydrogenated castor oil; the defoaming agent is a non-ionic surfactant or an ether-modified polysiloxane-based defoaming agent or a gemini surfactant or a defoaming agent at molecular level; and the wetting and dispersing agent is a non-ionic surfactant or a polymeric wetting and dispersing agent or a gemini surfactant or a high-molecular-weight wetting and dispersing agent. The thixotropic agent, the defoaming agent and the wetting and dispersing agent used in the present invention are all conventionally selected.

When the defoaming agent is a defoaming agent at molecular level, it is preferably Surfynol MD20 or Surfynol MD30; when the defoaming agent is a non-ionic surfactant, it is preferably a Surfynol 400 series product; when the defoaming agent is a ether-modified polysiloxane-based defoaming agent, Surfynol DF-62 or Foamex 815N or Foamex 822 can be selected; and when the defoaming agent is a gemini surfactant, it is preferably EnviroGem AD01.

When the wetting and dispersing agent is a non-ionic surfactant, a Surfynol 400 series product, preferably Surfynol 420 can be selected; when the wetting and dispersing agent is a polymeric wetting and dispersing agent, it is preferably TEGO Dispers 715W; when the wetting and dispersing agent is a gemini surfactant, it is preferably TEGO Twin 4000 or EnviroGem AD01; and when the wetting and dispersing agent is a high-molecular-weight wetting and dispersing agent, it is preferably DISPERBYK-190.

The present invention discloses a composite anti-corrosion inner lining containing a water-borne epoxy coating sealing coat, wherein the thickness of the water-borne epoxy coating sealing coat is preferably 40-250µm, and more preferably 40-200µm.

The present invention discloses a composite anti-corrosion inner lining containing a water-borne epoxy coating sealing coat, wherein the raw materials of the cement mortar inner lining layer comprising the following components in parts by mass: 100 parts of Portland cement or sulfate-resistant cement, 100-150 parts of river sand, 30-70 parts of water and 0-1.5 parts of water reducing agent.

The water reducing agent can be selected from polycarboxylic high-performance water reducing agents.

The present invention discloses a composite anti-corrosion inner lining containing a water-borne epoxy coating sealing coat, wherein the thickness of the cement mortar inner lining layer is 1.5-15mm, preferably 3-13mm and more preferably 5.5-10mm. The thickness of the cement mortar inner lining layer will be varied according to different pipe diameters; for the inner wall of the cast iron pipe, the cement mortar inner lining with a minimum thickness of 1.5mm is sufficient to ensure the anti-corrosion performances of the cast iron pipe; however, a cast iron slag layer on the inner side of the cast iron pipe was produced during the casting process, the larger the pipe diameter is, the thicker the slag layer is, and the cast iron slag layer can not be covered when the thickness of the cement mortar inner lining is too small; and of course, if the cement mortar inner lining is too thick, the waste of the raw materials is the result, and consequently the inner diameter is reduced, and the application of the epoxy coating is difficult. The obtained cement mortar inner lining is in line with the ASTM D4541 standard, and the drawing strength is 2-8MPa.

A method for manufacturing the composite anti-corrosion inner lining containing a water-borne epoxy coating sealing coat is characterized by comprising the following steps: (1) manufacturing, curing and performing surface treatment on a cement mortar inner lining layer, and (2) coating the epoxy coating on the cement mortar inner lining layer after surface treatment by high-pressure airless spraying or roll coating method, wherein the method for manufacturing the water-borne epoxy coating is as follows:
the method for manufacturing the component A is as follows: mixing epoxy resin E-51 and an active diluent uniformly according to a certain ratio, wherein the active diluent refers to allyl glycidyl ether and/or butyl glycidyl ether;
the method for manufacturing the component B is as follows: adding all of the required epoxy resin curing agent into a container, adding 50-80% by mass of required deionized water, 20-40% by mass of required defoaming agent, all of the required wetting and dispersing agent and all of required pigment and filler slowly while stirring slowly, then increasing the stirring rate to 1000rpm-2000rpm, performing high-speed dispersion for 10min, then performing sand milling till the fineness is not more than 40µm, finally adding the remaining water, the remaining defoaming agent and all of required thixotropic agent, mixing at a low speed of 200-600rpm for 30min, and filtering;
and the component A and the component B should be mixed before use, and the component A and the component B are used immediately after being mixed.

The present invention discloses a cast iron pipe with a composite anti-corrosion inner lining, comprising a cast iron pipe and one of the above-mentioned composite anti-corrosion inner linings, which is lined and coated on the inner wall of the cast iron pipe.

The present invention discloses a cast iron pipe with a composite anti-corrosion inner lining, wherein the cast iron material of the cast iron pipe is nodular cast iron.

The present invention discloses a cast iron pipe fitting with a composite anti-corrosion inner lining, comprising a cast iron pipe fitting and one of the above-mentioned composite anti-corrosion inner linings, which is lined and coated on the inner wall of the cast iron pipe fitting.

The present invention discloses a cast iron pipe fitting with a composite anti-corrosion inner lining, wherein the cast iron material of the cast iron pipe fitting is nodular cast iron.

The manufacturing method for the cast iron pipe or pipe fitting with a composite anti-corrosion inner lining of the present invention, is as follows:

### (1) Lining and coating of cement mortar

This step is a prior art, as for the cast iron pipe (cast iron straight pipe), suplying a cement mortar mixture to the inner wall of the cast iron pipe by screw feeding or pumping method while rotating the cast iron pipe on a centrifuge , so that the mixture was distributed on the nodular cast iron pipe in the axial direction uniformly, then the cast iron pipe is rotated at a high speed, and the cement mortar inner lining is distributed uniformly by the centrifugal effect to form the cement mortar inner lining layer; and in this way, the cement mortar inner lining jointed with the inner wall of the cast iron pipe tightly, the adhesion between the cement mortar inner lining and the wall of the cast iron pipe is increased, and the defects of hollowing and the like can be reduced.

This step is a prior art, as for the cast iron pipe fitting (special shaped pipe), the cement mortar inner lining was formed by spraying or manually smearing method, and the spraying method was performed by spraying the cement mortar onto the inner surface of the pipe through a high-speed rotating spray head or by spraying the cement mortar onto the inner surface of the pipe through a mortar spray gun via compressed air, so as to form the cement mortar inner lining layer with a certain thickness;

### (2) Curing of cement mortar inner lining

A steam curing method can be used for curing the cement mortar inner lining layer, the curing temperature is 40°C-80°C, the humidity is above 90%, and the curing time is 7h-12h; and in this way, the strength of the cement mortar inner lining can equivalent to 70% or more of the 28-day long natural curing strength within a short time.

### (3) Surface treatment of the cement mortar inner lining

After the cement mortar inner lining layer is cured, surface treatment is performed by internal grinding and/or pressure water washing and/or sand blasting method to remove floating pulps and other dirt on the surface; and dust and other dirt on the cement mortar inner lining layer are removed by pressure water washing or high-pressure air blowing method.

### (4) Application of the water-borne epoxy coating

Firstly, the component A and the component B are mixed uniformly according to a certain ratio and used immediately after being mixed, and the epoxy coating is coated on the cement mortar inner lining layer after surface treatment by a high-pressure airless spraying or roll coating method.

The cast iron pipes or pipe fittings with a composite anti-corrosion inner lining of the present invention has the following advantages and positive effects:
1. The composite anti-corrosion inner lining have a combined performances of active anti-corrosion and passive anti-corrosion, namely the implementation of the epoxy coating sealing coat can reduce or isolate the contact between the water and the cement mortar inner lining, and this type of anti-corrosion is passive; meanwhile, the possibility of releasing alkaline substances from the cement mortar inner lining to the outside can be slowed down or prevented, and this ensured that alkaline substances in the cement mortar can be enriched on the inner wall of the nodular iron pipe for a long time, so that the inner wall of the iron pipe is passivated, and this type of anti-corrosion is active which ensures a long-term anti-corrosion performance.
2. The possibility of releasing the alkaline substances from the cement mortar inner lining into the water can be reduced or prevented and further ensuring a good water quality due to the implementation of the epoxy coating sealing coat on the composite anti-corrosion inner lining. The inhibition of the precipitation of the alkaline substances from the cement mortar inner lining is confirmed mainly by the following performances:

### 1) Dynamic long-term sealing performances

The testing of the dynamic long-term sealing performance is performed by eroding the sealing coat of the cast iron pipes or pipe fittings using a circulating water with a flow rate of 1.8-3.5m/s and a pH value of 8 for 3 months, and continuously increasing/decreasing the water pressure, and the detected pH value of the circulating water is as follows: 8<pH≤9.5.

### 2) Static long-term sealing performances

The whole cast iron pipe or pipe fitting with an anti-corrosion inner lining is full-filled with the prepared water with a pH value of 8, soaking for 2 months, and the detected variation L of the pH value of the soaking water is as follows: L≤0.5.
3. The materials of the water-borne epoxy sealing coat do not containing any organic solvent, and the sealing coat is non-toxic after being dried. Therefore, the water-borne epoxy sealing coat can be used as the anti-corrosion inner lining of a pipeline for drinking water safely, no pollution to the water, and no substances harmful to human bodies produced.
4. The surface of the water-borne epoxy sealing coat is smooth, the frictional resistance is reduced, the water flow rate is increased, and the energy for conveying the water is reduced.
5. The above-mentioned cast iron pipes or pipe fittings with a composite anti-corrosion inner lining has a performance that the inner lining layer will not peeled or damaged in a hydraulic circulating environment.

### Detailed Description of the Embodiments

The present invention is further illustrated below in conjunction with specific embodiments.

A pipe with an anti-corrosion inner lining disclosed by the present invention is a DN100 nodular cast iron pipe, and the manufacturing process is as follows:

### (1) Lining and coating of cement mortar

This step is a prior art, as for the cast iron pipe (cast iron straight pipe), suplying a cement mortar mixture to the inner wall of the cast iron pipe by screw feeding or pumping method while rotating the cast iron pipe on a centrifuge , so that the mixture was distributed on the nodular cast iron pipe in the axial direction uniformly, then the cast iron pipe is rotated at a high speed, and the cement mortar inner lining is distributed uniformly by the centrifugal effect to form the cement mortar inner lining layer; and in this way, the cement mortar inner lining jointed with the inner wall of the cast iron pipe tightly, the adhesion between the cement mortar inner lining and the wall of the cast iron pipe is increased, and the defects of hollowing and the like can be reduced.

This step is a prior art, as for the cast iron pipe fitting (special shaped pipe), the cement mortar inner lining was formed by spraying or manually smearing method, and the spraying method was performed by spraying the cement mortar onto the inner surface of the pipe through a high-speed rotating spray head or by spraying the cement mortar onto the inner surface of the pipe through a mortar spray gun via compressed air, so as to form the cement mortar inner lining layer with a certain thickness;

### (2) Curing of cement mortar inner lining

A steam curing method can be used for curing the cement mortar inner lining layer, the curing temperature is 40°C-80°C, the humidity is above 90%, and the curing time is 7h-12h; and in this way, the strength of the cement mortar inner lining can equivalent to 70% or more of the 28-day long natural curing strength within a short time.

### (3) Surface treatment of the cement mortar inner lining

After the cement mortar inner lining layer is cured, surface treatment is performed by internal grinding and/or pressure water washing and/or sand blasting method to remove floating pulps and other dirt on the surface; and dust and other dirt on the cement mortar inner lining layer are removed by pressure water washing or high-pressure air blowing method.

### (4) Application of the water-borne epoxy coating

Firstly, the component A and the component B are mixed uniformly according to a certain ratio, and the epoxy coating is coated on the cement mortar inner lining layer after surface treatment by a high-pressure airless spraying or roll coating method of prior art. Wherein a method for manufacturing the water-borne epoxy coating is as follows:
the method for manufacturing the component A is as follows: mixing epoxy resin E-51 and an active diluent uniformly according to a certain ratio, wherein the active diluent refers to allyl glycidyl ether and/or butyl glycidyl ether;
the method for manufacturing the component B is as follows: adding all of the required epoxy resin curing agent into a container, adding 50-80% by mass of required deionized water, 20-40% by mass of required defoaming agent, all of the required wetting and dispersing agent and all of required pigment and filler slowly while stirring slowly, then increasing the stirring rate to 1000rpm-2000rpm, performing high-speed dispersion for 10min, then performing sand milling till the fineness is not more than 40µm, finally adding the remaining water, the remaining defoaming agent and all of required thixotropic agent, mixing at a low speed of 200-600rpm for 30min, and filtering.

The above-mentioned methods are used for production of the composite anti-corrosion inner lining of the present invention using the components listed in Table 1-Table 3 respectively, and obtained the cast iron pipes or pipe fittings with the composite anti-corrosion inner lining.

**Table 1 Composition of The Raw Materials of Cement Mortar Inner Lining Layer**

| Examples | | a | b |
|---|---|---|---|
| Cement mortar (parts by mass) | Sulfate-resistant cement | 100 | |
| | Portland cement | | 100 |
| | River sand | 105 | 130 |
| | Water | 35 | 65 |
| | Water reducing agent | 1.3 | 0 |
| Thickness of the cement mortar inner lining (mm) | | 10 | 5.5 |
| Drawing strength of the cement mortar inner lining (MPa) | | 8.0 | 2.0 |

**Table 2 Composition and Thickness of the Water-Borne Epoxy Coating**

| Water-borne epoxy resin coating No. | | A | B | C | D | E | F | G |
|---|---|---|---|---|---|---|---|---|
| Component A | Epoxy resin E-51 (in percentage by mass) | 20.0 | 29.0 | 25.4 | 18.0 | 15 | 15 | 30.0 |
| | Active diluent (in percentage by mass) | 0 | 4.0(AG E) | 4.0 (AGE) | 2.0 (AGE) | 1.8 (BGE) | 1.6 (AGE) | 0 |
| Component B | Water-borne epoxy resin curing agent(in percentage by mass) | 30.0 (THW-208) | 34.0 (WAT ERPOXY751) | 45.0 (ANQ UAMINE360) | 30.4 (ANQUAMINE721) | 27 (WATERPOXY 751) | 27 (THW-208) | 45.0 (WEC-402 ) |
| | Deionized water (in percentage by mass) | 50.0 | 33.0 | 25.6 | 25.0 | 24 | 24 | 25.0 |
| | Pigment and filler (in percentage by mass) | 0 | 0 | 0 | 22.5 (Titanium white) | 30 (Quartz powder) | 30 (Barium sulfate) | 0 |
| | Wetting and dispersing agent (in percentage by mass) | 0 | 0 | 0 | 1.0(SURFYNOL 420) | 0.8(DISPERBYK-190) | 1.0(TEGO Dispers 715W) | 0 |
| | Defoaming agent (in percentage by mass) | 0 | 0 | 0 | 0.2(Enviro Gem AD01) | 0.5 (Foamex 815N) | 0.5(Foamex 815N) | 0 |
| | Thixotropic agent Organic bentonite (in percentage by mass) | 0 | 0 | 0 | 0.9 | 0.9 | 0.9 | 0 |
| Thickness of sealing coat (µm) | | 20 | 40 | 60 | 200 | 250 | 400 | 5 |

According to the performances of the lined cast iron pipes with different thicknesses and compositions, the thickness range of the sealing coats is determined by inspecting the appearances of the epoxy sealing coats with different thicknesses of the cement mortar inner linings and the variation of the pH value of the soaking water, analyzing the results of hydraulic circulating test and analyzing the results of short-term sealing performance and dynamic long-term sealing performance.
1. Determination of surface state of the water-borne epoxy coating sealing coat
   a. Testing method: visual determination is performed on the cast iron pipe with a composite anti-corrosion inner lining.
   b. Evaluation method: ○-smooth surface; □-flat surface; and Δ-cement mortar inner lining can be covered.
2. Determination of static long-term sealing performance of the water-borne epoxy coating sealing coat
   a. Testing method: the cast iron pipe with a composite anti-corrosion inner lining is full-filled with the prepared water with a pH of 8, soaking is performed for 2 months, and then the variation of the pH value of the soaking water is detected.
   b. Evaluation method: ○-the increment of the pH value of the water in the pipe≤0.5; and ×-the increment of the pH value of the water in the pipe≥1.0.
3. Determination of dynamic long-term sealing performance of the water-borne epoxy coating sealing coat
   a. Testing method: the sealing coat of the cast iron pipe with a composite anti-corrosion inner lining is eroded by standard water with a flow rate of 1.8-3.5m/s and the pH value of 8 in a circulating manner for 3 months, the pressure is continuously increased/decreased, and the pH value of the circulating water is detected.
   b. Evaluation method: ○-after 3 months, the pH value of the circulating water in the pipe is as follows: 8<pH≤9.5 and the sealing coat is intact; and ×-after 3 months, the pH value of the water in the pipe is as follows: pH>9.5 and blistering and shedding phenomena was observed on the sealing coat.
4. Determination of hydraulic circulating performance of the water-borne epoxy coating sealing coat
   a. Testing method:
      1) The two ends of the anti-corrosion lined cast iron pipe and pipe fitting thereof with a cement mortar epoxy coating sealing coat are sealed, and a pressure gauge and related water injection equipment are mounted;
      2) water is injected into the pipe, the pressure is increased to 16-35bar, and this pressure is maintained for 2h;
      3) then the pressure is relieved to 0, and this pressure is maintained for 2h;
      4) one pressure cycle process is constituted by 1) and 2); and
      5) 30 cycles are preformed in total.
   b. Evaluation method: blistering and shedding states are determined visually, and the adhesion situation is evaluated through the difficulty for scraping with a blade.

**Table 3 Composition and Performance Testing of Composite Anti-Corrosion Inner Lining**

| Examples | 1 | 2 | 3 | 4 | 5 | 6 | 7 | 8 | 9 | 10 | Comparative example 1 | Comparative example 2 |
|---|---|---|---|---|---|---|---|---|---|---|---|---|
| Cement mortar inner lining layer used in this example | a | a | a | a | a | b | b | b | b | b | a | a |
| Water-borne epoxy coating sealing coat used in this example | A | B | C | D | E | A | B | C | D | E | F | G |
| Surface state of the epoxy coating sealing coat | □ | ○ | ○ | ○ | ○ | □ | ○ | ○ | ○ | ○ | ○ | Δ |
| Static long-term sealing performance of the epoxy coating sealing coat | ○ | ○ | ○ | ○ | ○ | ○ | ○ | ○ | ○ | ○ | ○ | × |
| Dynamic long-term sealing performance of the epoxy coating sealing coat | ○ | ○ | ○ | ○ | ○ | ○ | ○ | ○ | ○ | ○ | × | × |
| Circulating water pressure testing of the epoxy coating sealing coat | The sealing coat has no blistering or shedding and has good adhesion. | | | | | The sealing coat has no blistering or shedding and has good adhesion. | | | | | The sealing coat has blistering phenomena. | The sealing coat has no blistering and shedding phenomena. |

It can be seen from Table 3 that when the thickness of the water-borne epoxy coating sealing coat is 20-250µm, the water-borne epoxy coating sealing coat has a effect of inhibiting alkalinity of the cement mortar inner lining and is able to withstand the hydraulic circulating testing with a maximum pressure of 35bar; furthermore, the sealing coat has no phenomena of blistering, shedding or decreasing in adhesion.

### Industrial Applicability

The composite anti-corrosion inner lining have a combined performances of active anti-corrosion and passive anti-corrosion, namely the implementation of the epoxy coating sealing coat can reduce or isolate the contact between the water and the cement mortar inner lining, and this type of anti-corrosion is passive; meanwhile, the possibility of releasing alkaline substances from the cement mortar inner lining to the outside can be slowed down or prevented, and this ensured that alkaline substances in the cement mortar can be enriched on the inner wall of the nodular iron pipe for a long time, so that the inner wall of the iron pipe is passivated, and this type of anti-corrosion is active which ensures a long-term anti-corrosion performance.

The materials of the water-borne epoxy sealing coat do not containing any organic solvent, and the sealing coat is non-toxic after being dried. Therefore, the water-borne epoxy sealing coat can be used as the anti-corrosion inner lining of a pipeline for drinking water safely, no pollution to the water, and no substances harmful to human bodies produced.

The surface of the water-borne epoxy sealing coat is smooth, the frictional resistance is reduced, the water flow rate is increased, and the energy for conveying the water is reduced.

The above-mentioned cast iron pipes or pipe fittings with a composite anti-corrosion inner lining has a performance that the inner lining layer will not peeled or damaged in a hydraulic circulating environment.

The above advantages can enable the composite anti-corrosion inner lining containing a water-borne epoxy coating sealing coat and the application thereof to be better manufactured or used in industry in comparison with the prior art.

## Claims

1. A composite anti-corrosion inner lining containing a water-borne epoxy coating sealing coat, **characterized by** comprising a cement mortar inner lining layer and the water-borne epoxy coating sealing coat coated on the cement mortar inner lining layer.

2. The composite anti-corrosion inner lining containing a water-borne epoxy coating sealing coat according to claim 1, **characterized in that** the water-borne epoxy coating of the water-borne epoxy coating sealing coat comprises a component A and a component B, wherein:
the component A comprises the following components in percentage by mass:
| | |
|---|---|
| epoxy resin E-51: | 10.0-50.0% |
allyl glycidyl ether and/or butyl glycidyl ether: 0-5.0%; and
the component B comprises the following components in percentage by mass:
| | |
|---|---|
| water-borne epoxy resin curing agent: | 20.0-60.0% |
| deionized water: | 20.0-55.0% |
| pigment and filler: | 0-50.0% |
| wetting and dispersing agent: | 0-4.0% |
| defoaming agent: | 0-1.0% |
| thixotropic agent: | 0-2.0%; |
The water-borne epoxy resin curing agent refers to modified polyamide with a self-emulsifying function or modified fatty amine with a self-emulsifying function or an epoxy-polyamine adduct with a self-emulsifying function, and the thickness of the water-borne epoxy coating sealing coat is 20-250µm.

3. The composite anti-corrosion inner lining containing a water-borne epoxy coating sealing coat according to claim 2, **characterized in that** the water-borne epoxy coating of the water-borne epoxy coating sealing coat comprises a component A and a component B, wherein:
the component A comprises the following components in percentage by mass:
| | |
|---|---|
| epoxy resin E-51: | 15-30.0% |
allyl glycidyl ether and/or butyl glycidyl ether: 0-4.0%; and
the component B comprises the following components in percentage by mass:
| | |
|---|---|
| water-borne epoxy resin curing agent: | 27-45.0% |
| deionized water: | 24.0-50.0% |
| pigment and filler: | 0-30.0% |
| wetting and dispersing agent: | 0-1.0% |
| defoaming agent: | 0-0.5% |
| thixotropic agent: | 0-0.9%. |

4. The composite anti-corrosion inner lining containing a water-borne epoxy coating sealing coat according to claim 2 or 3, **characterized in that** the pigment and filler is titanium white and/or talcum powder and/or quartz powder and/or carbon black and/or precipitated barium sulfate.

5. The composite anti-corrosion inner lining containing a water-borne epoxy coating sealing coat according to claim 4, **characterized in that** the thixotropic agent is organic bentonite or silicon dioxide or hydrogenated castor oil; the defoaming agent is a non-ionic surfactant or an ether-modified polysiloxane-based defoaming agent or a gemini surfactant or a defoaming agent at molecular level; and the wetting and dispersing agent is a non-ionic surfactant or a polymeric wetting and dispersing agent or a gemini surfactant or a high-molecular-weight wetting and dispersing agent.

6. The composite anti-corrosion inner lining containing a water-borne epoxy coating sealing coat according to one of claims 2-5, **characterized in that** the thickness of the water-borne epoxy coating sealing coat is preferably 40-250µm, and more preferably 40-200µm.

7. The composite anti-corrosion inner lining containing a water-borne epoxy coating sealing coat according to claim 3, **characterized in that** the raw materials of the cement mortar inner lining layer comprising the following components in parts by mass: 100 parts of Portland cement or sulfate-resistant cement, 100-150 parts of river sand, 30-70 parts of water and 0-1.5 parts of water reducing agent.

8. The composite anti-corrosion inner lining containing a water-borne epoxy coating sealing coat according to one of claims 2-7, **characterized in that** the thickness of the cement mortar inner lining layer is 1.5-15mm, preferably 3-13mm and more preferably 5.5-10mm.

9. A method for manufacturing the composite anti-corrosion inner lining containing a water-borne epoxy coating sealing coat according to one of claims 2-8, **characterized by** comprising the following steps: (1) manufacturing, curing and performing surface treatment of a cement mortar inner lining layer, and (2) coating the epoxy coating on the cement mortar inner lining layer after the surface treatment, wherein the manufacturing method for the water-borne epoxy coating is as follows:
the manufacturing method for the component A is as follows: mixing epoxy resin E-51 and an active diluent according to a certain ratio uniformly, wherein the active diluent refers to allyl glycidyl ether and/or butyl glycidyl ether;
the manufacturing method for the component B is as follows: adding all of the required epoxy resin curing agent into a container, adding 50-80% by mass of the required deionized water, 20-40% by mass of the required defoaming agent, all of the required wetting and dispersing agent and all of the required pigment and filler slowly while stirring slowly, then increasing the stirring rate to 1000rpm-2000rpm, performing high-speed dispersion for 10min, then performing sand milling till the fineness is not more than 40µm, finally adding the remaining water, the remaining defoaming agent and all of the required thixotropic agent, mixing for 30min at a low speed of 200-600rpm, and filtering;
and the component A and the component B should be mixed before use.

10. A cast iron pipe with a composite anti-corrosion inner lining, **characterized by** comprising a cast iron pipe and the composite anti-corrosion inner lining according to one of claims 1-8, which is lined and coated on the inner wall of the cast iron pipe.

11. The cast iron pipe with a composite anti-corrosion inner lining according to claim 10, **characterized in that** the cast iron material of the cast iron pipe is nodular cast iron.

12. A cast iron pipe fitting with a composite anti-corrosion inner lining, **characterized by** comprising a cast iron pipe fitting and the composite anti-corrosion inner lining according to one of claims 1-8, which is lined and coated on the inner wall of the cast iron pipe fitting.

13. The cast iron pipe fitting with a composite anti-corrosion inner lining according to claim 12, **characterized in that** the cast iron material of the cast iron pipe fitting is nodular cast iron.
